# EUROPEAN PATENT SPECIFICATION

(11) **EP 1 228 326 B1**
(45) Date of publication and mention of the grant of the patent: **03.09.2003**
(21) Application number: 00917519.1
(22) Date of filing: 11.04.2000
(51) Int. Cl.: F16G 11/10, F16G 11/14

(54) **PRECISION ECCENTRIC CLAMP FOR CORDS AND THE LIKE**
PRÄZISIONSKLEMME MIT EXCENTER FÜR SEILE ODER DERGLEICHEN
DISPOSITIF DE SERRAGE EXCENTRIQUE DE PRECISION POUR CORDES ET ANALOGUES

(30) Priority: 13.10.1999 PL 33604799
(43) Date of publication of application: 07.08.2002
(73) Proprietor: Szczepanczyk, Jerzy, 92-313 Lodz (PL)
(72) Inventor: Szczepanczyk, Jerzy, 92-313 Lodz (PL)
(74) Representative: Chaillot, Geneviève
(86) International application number: PL0000028
(87) International publication number: WO01027494

(56) References cited:
- DE-A- 19 700 193
- US-A- 1 385 837
- US-A- 2 190 661

## Description

The object of this invention is a precision, eccentric clamp for cords, ropes, strings, made of threads of natural fibres, plastic, metal and it is particularly suitable for very thin cords twisted from tiny wires.

There are known many solutions of clamping devices for cords and the likes, applying friction forces for clamping.
In conventional solutions to exert the necessary pressure, screw, lever, cam-lever and wedge mechanisms are applied. None of these constructions makes it possible to realise a simple self-clamping mechanism, enabling to withstand forces equal to the cord limit strength, without causing durable cord deformation. In the most often cases these deformations preclude re-clamping the cord on the section where the cord was once been clamped.

In German application No 197 00 193, an eccentric cam clamping mechanism is described, in which, to make a cord loop. two ends of the cord are to be introduced into a bore within the base element in which, In a hexagonal cavity, a guiding element with respective hexagonal external shape, is mounted, the guiding element having a first large through bore in which the clamping element is placed, and having a second bore which is coaxial with the bore for the cords in the base element and tangent to the large bore in the guiding element, the clamping element being in the shape of a roller with an eccentric grove on its circumference , the grove being of rectangular shape in cross section, large enough to accommodate two cords to be clamped, and having a knurled rectilinear bottom. Turning the clamping element causes locking both ends of cord thus making loop. Because of the fact that both ends of cord making loop must pass through one bore and there they are clamped by the same eccentric roller, makes it impossible to press them symmetrically and even may prevent to clamp one of the cord at all . Besides, clamping by a rectilinear, knurled bottom of the eccentric roller, causes local wear and distortions of the cord, especially if it is made of twisted threads or wires.

It is an object of this invention to provide a simple clamping device, which could create maximum locking pressure upon the cord without causing its deformation and wear down.

The clamping device according to the present invention consists of a frame body having a first cylindrical through bore into which a cylindrical roller is fittingly mounted with possibility of rotary movement. The roller has on its periphery an eccentric groove, the bottom of which being of semi-circular shape in cross section, with radius roughly equal to the radius of the cord to be clamped, the depth of the groove changing from minimum zero to maximum slightly bigger than the cord diameter. The frame body has a second and third through bore mutually coaxial with their axis tangent or roughly tangent to the circumference of said first bore and perpendicular to the generating line of said circumference, the second bore and third bore being situated directly opposite to said eccentric groove, and having the diameter slightly bigger than the diameter of the cord to be clamped. The frame body has also a cavity situated directly opposite to said eccentric groove, adjacent to said second and third bore, and communicating with said first bore, with the bottom of a semi-circular shape in cross section with radius roughly equal to the radius of the cord to be clamped, and with variable depth changing from zero to roughly half of the diameter of the cord to be clamped, where the cavity in section along its surface of symmetry constitutes an arc at one end tangent to the circumference of the first bore and at its other end tangent or roughly tangent to the third bore, the radius of said arc being slightly bigger than the radius of the first bore.

Mounting in the first bore two rollers, which are rotated independently either in the same direction or in opposite directions, makes it possible to create two cord loops , either at the same side of the frame body, or at opposite sides of said frame body.

The eccentric groove forces the cord into the cavity inside the frame body encompassing the cord on the whole length of the cavity arc, thus creating first clamping action. Further clamping action, that means self-clamping action, is created under actions of those forces which pull the cord out of the frame body Owing to the semicircular shape of the bottom of the eccentric groove on the roller and the same shape of the cavity bottom in the frame body with radii roughly equal to the radius of the cord to be clamped , no deformation and no wear-down of the cord occurs, no matter how big the clamping pressure is exerted upon the cord.

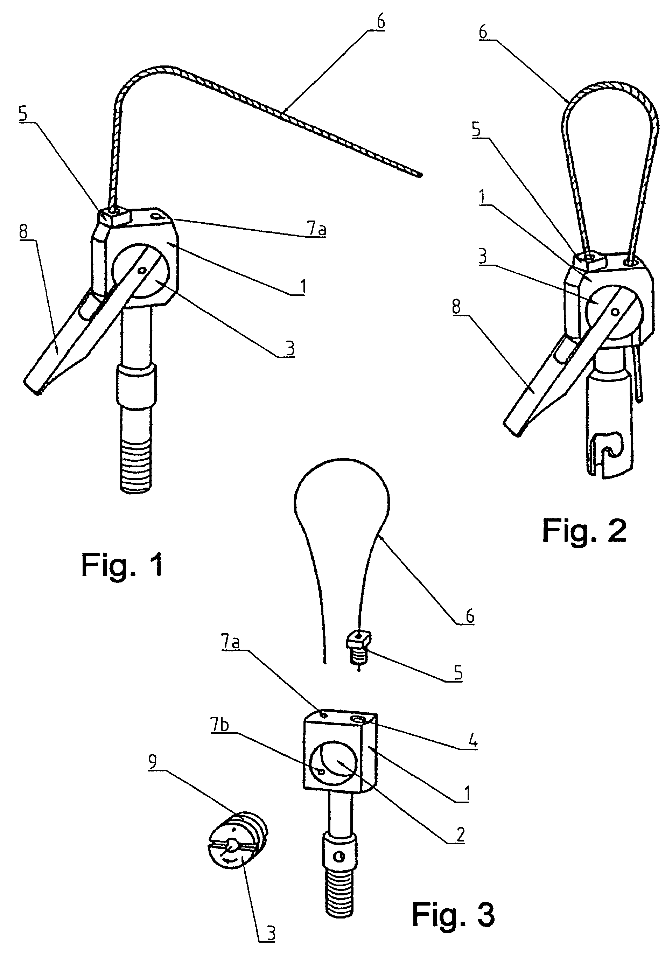

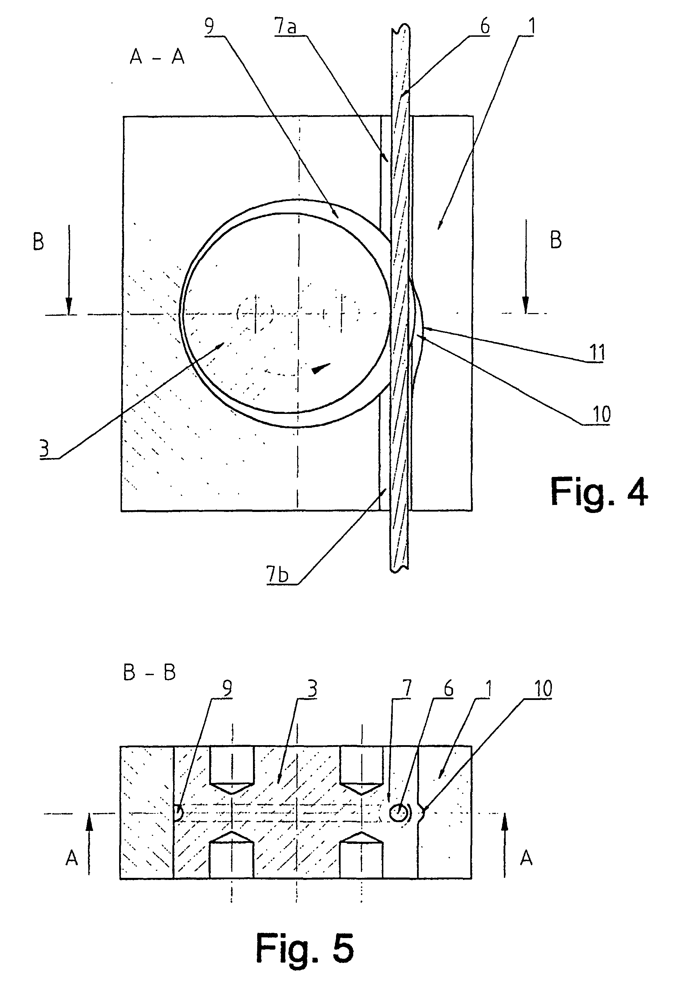

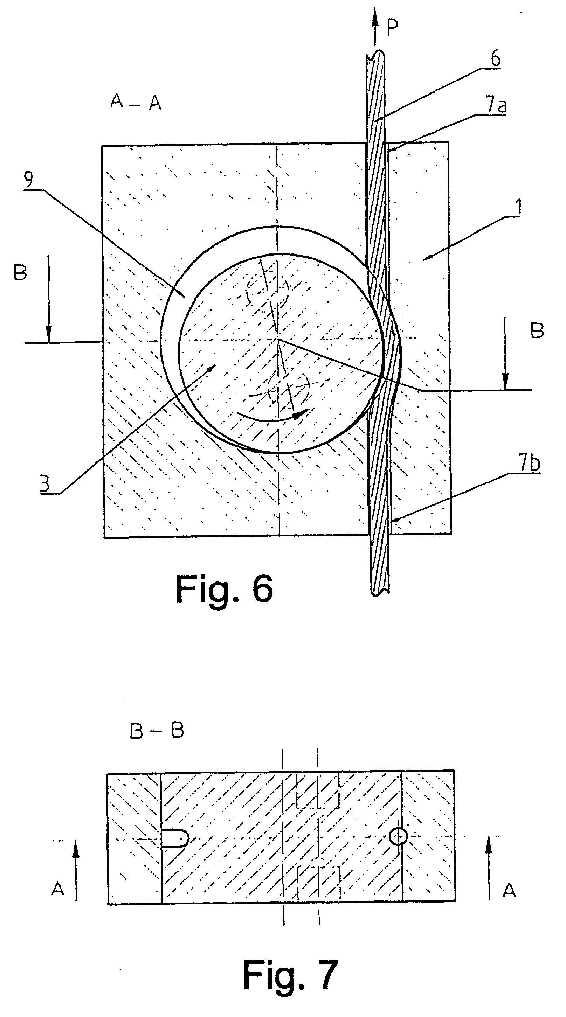

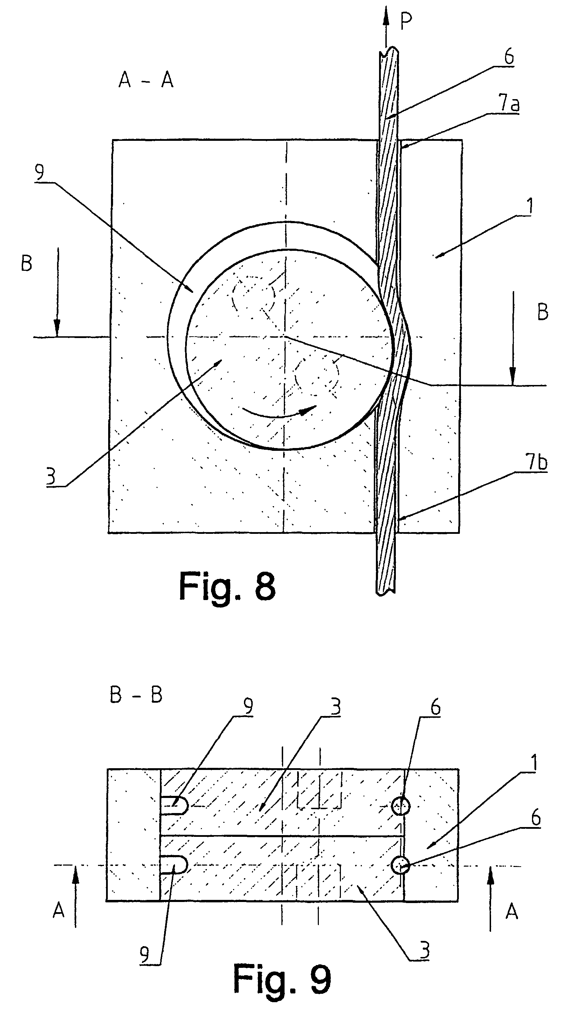

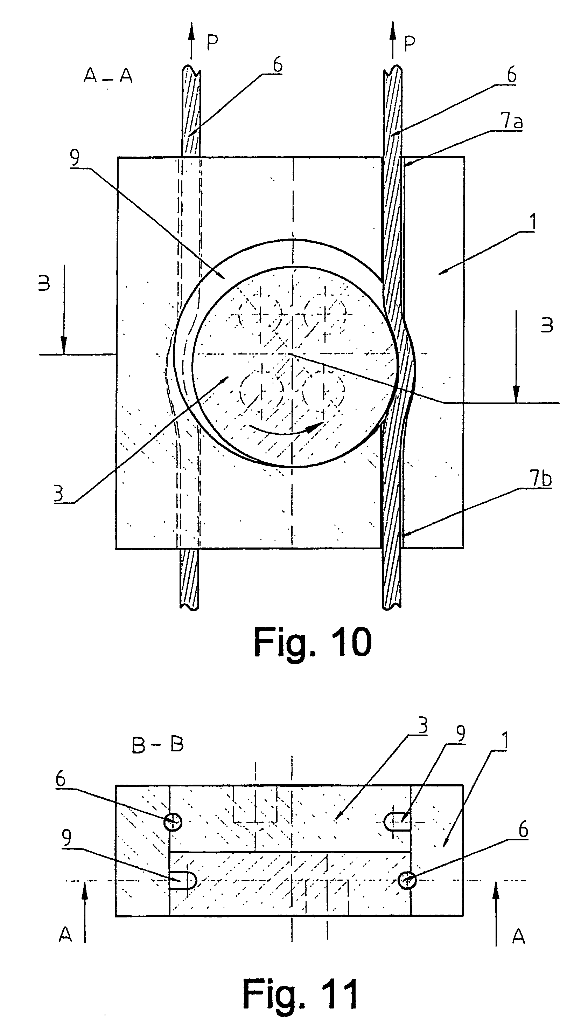

The object of this invention is illustrated in, but not limited to, in the preferable embodiment, on the accompanying drawing , on which Fig. 1 illustrates the clamping device in pictorial view with one end of cord free, Fig. 2 is the same view but with cord loop already made, Fig.3 is an exploded view of the device according to the invention, Fig. 4 is a full section of the device with one roller, illustrating the state after the cord has been inserted, Fig. 5 is a cross section along the line B - B on Fig. 4, Fig. 6 is a full section of the device with one roller, illustrating the state after the cord has been clamped, Fig. 7 is a cross section along line B - B on Fig. 6, Fig. 8 is a full section of the device with two rollers working in synchronous , illustrating the state after the cords have been clamped, Fig. 9 is a cross section along line B - B on Fig 8, Fig. 10 is a full section of the device with two rollers working in opposite directions, illustrating the state after the cords have been clamped and Fig 11 is a cross section along the line B - B on Fig. 10.

The clamping device according to present invention consists of a frame body 1 having a first cylindrical through bore 2 into which a cylindrical roller 3 is fittingly mounted with possibility of rotary movement, but with no possibility of any axial movement, owing to lever 8, which encompasses the frame body 1 and is fixed to the roller 3 in any manner (not shown). The roller 3 has on its periphery an eccentric groove 9 the bottom of which being of semi-circular shape in cross section with radius roughly equal to the radius of the cord 6 to be clamped, the depth of the grove changing from minimum zero to maximum slightly bigger than the cord diameter. The frame body 1 has a second through bore 7a and a third through bore 7b mutually coaxial with their axis tangent to the circumference of said first bore 2 and perpendicular to the generating line of said circumference, where the bores 7a and 7b being situated directly opposite to the eccentric groove 9, and having the diameter slightly bigger than the diameter of the cord 6 to be clamped. Both second and third bore have an inlet and outlet portions, in accordance with the direction of pulling forces acting upon the cord 6 when the latter is passed through the clamp. Said frame body 1 also has a cavity 10, situated directly opposite to said eccentric groove 9 adjacent to said second bore 7a and third bore 7b and communicating with the first bore 2. The cavity 10 has the bottom of a semi-circular shape in the cross section, with radius roughly equal to the radius of the cord 6 to be clamped and with variable depth changing from zero to roughly half of the radius of the cord 6 to be clamped. Said cavity 10 in the section along its surface of symmetry constitutes an arc 11 at one end tangent to the circumference of the first bore 2 and, at the other end, tangent to outlet portion of the bore 7b. The radius of said arc 11 is slightly bigger than the radius of the first bore 2.

On the outer portion of the frame body 1 a threaded bore 4 is situated into which a special ending 5 of the cord 6 is screwed-in. To make a loop , the other, free end of the cord 6 is to be passed through the second and third bore 7a and 7b, then is to be locked by turning the lever 8 and roller 3 in the direction of the arrow on Fig. 4.Under pressure of the eccentric groove 9 cord 6 is deflected and fills the cavity 10, creating first stage of frictional locking of the cord 6 between cavity 10 and eccentric groove 9. Second stage of the frictional locking occurs under action of pulling force P in cord 6 (Fig. 6) which causes self-turning of the roller 3 thus exerting further pressure upon cord 6 and in consequence further locking of the cord 6, this time in automatic self-locking manner, with the strength growing in proportion to the to pulling force P. Owing to the semicircular shape of the bottom of the eccentric groove 9 on the roller 3 and of the bottom of the cavity 10 in the frame body 1 with radii corresponding to the radius of the cord 6 to be clamped , no deformation and no wear-down of the cord diameter occurs, no matter how big the clamping force is exerted.

Within the scope of the invention, modifications can be made, consisting of application of two rollers in tandem, mounted within the frame body, acting independently, which makes it possible to create two cord loops either acting in parallel at one side(Fig.8 and 9) or acting oppositely at opposite sides of the frame body.(Fig. 10 and 11).

The clamping device according to present invention is particularly suitable to very small, precision embodiments with application in dentistry for removing dental bridges and prosthesis without impairing existing ceramic parts of the dentistry appliances.

## Claims

1. A precision eccentric clamp consisting of a frame body (1) having a first cylindrical through bore (2) into which a cylindrical roller (3) is fittingly mounted with possibility of rotary movement, the roller (3) having on its periphery an eccentric groove (9), the frame body (1) having a second bore (7a) and the third bore (7b) mutually coaxial, with their axis tangent or roughly tangent to the circumference of said first bore (2) and perpendicular to the generating line of said circumference, said second and third bore being situated directly opposite to the eccentric groove (9) and having the diameter slightly bigger than the diameter of the cord (6) to be clamped, **characterised by** that, that said eccentric grove (9) has its bottom of semi circular shape in cross section , with the radius roughly equal to the radius of the cord (6) to be clamped, and with the depth changing from minimum zero to maximum slightly bigger than the cord diameter, and by the fact, that the frame body (1) has a cavity (10), communicating with said first bore (2) situated directly opposite to said eccentric groove (9) and adjacent to said second bore (7a) and the third bore (7b), with the bottom of semi-circular shape in cross section with radius roughly equal to the radius of the cord (6) to be clamped and with variable depth changing from zero to roughly half of the diameter of the cord (6) where the cavity (10) in section along its surface of symmetry constitutes an arc (11), at one end tangent to the circumference of the first bore (2) and, at the other end tangent or roughly tangent to the third bore (7b), the radius of said arc being slightly bigger than the radius of the first bore (2).

2. A precision eccentric clamp according to claim 1, **characterised by** that, that it has two rollers in tandem working independently.

3. A precision eccentric clamp according to claim 2, **characterised by** that, that said two rollers work in the same direction.

4. A precision eccentric clamp according to claim 2, **characterised by** that, that said two rollers work in opposite directions.

## Patentansprüche

1. Exzentrische Präzisionsklemmvorrichtung bestehend aus einem Grundkörper (1) mit einer ersten zylindrischen Durchbohrung (2), in welcher ein zylindrisches Rollelement (3) drehbar eingepasst befestigt ist, wobei das Rollelement (3) eine Mantelfläche mit einer exzentrischen Nut (9) aufweist und am Grundkörper (1) eine zweite Bohrung (7a) und eine dritte Bohrung (7b) zueinander koaxial und mit der gemeinsamen Achse tangential oder in Wesentlichen tangential zur inneren Umfangsfläche und senkrecht zur Bohrrichtung der ersten Bohrung (2) ausgebildet sind, wobei die zweite und dritte Bohrung (7a, 7b) unmittelbar mit der exzentrischen Nut (9) fluchtet und im Durchmesser etwas größer ist als der Durchmesser eines in der Klemmvorrichtung einzuklemmenden Seils (6),
**dadurch gekennzeichnet,**
**dass** die exzentrische Nut (9) eine im Querschnitt halbkreisförmige Grundfläche aufweist, deren Radius im Wesentlichen mit dem Radius des einzuklemmenden Seils (6) übereinstimmt und dass die Tiefe der Nut (9) zwischen Null und einem Wert etwas größer als der Durchmesser des einzuklemmenden Seils (6) variiert, und dass der Grundkörper (1) an der ersten Bohrung (2) mit einer rinnenförmigen Ausnehmung (10) versehen ist, welche zwischen der zweiten und dritten Bohrung (7a, 7b) unmittelbar mit der exzentrischen Nut (9) des Rollelements (3) fluchtend angeordnet ist, dass die Ausnehmung (10) eine im Querschnitt halbkreisförmige Grundfläche aufweist, deren Radius im Wesentlichen mit dem Radius des einzuklemmenden Seils (6) übereinstimmt, dass die Tiefe der Ausnehmung (10) zwischen Null und einem Wert etwas größer als dem Radius des einzuklemmenden Seils (6) variiert, dass die Ausnehmung (10) im Längsschnitt seiner Symmetriefläche einen Bogen (11) bildet, welcher an seinem einen Ende tangential zur inneren Umfangsfläche der ersten Bohrung (2) und am anderen Ende tangential oder in Wesentlichen tangential zur dritten Bohrung (7b) ist und dass der Radius des Bogens (11) etwas größer als der Radius der ersten Bohrung (2) ist.

2. Exzentrische Präzisionsklemmvorrichtung gemäß Anspruch 1,
**dadurch gekennzeichnet,**
**dass** der Grundkörper (1) zur Aufnahme zweier unabhängig voneinander arbeitenden Rollelemente (3) ausgebildet ist.

3. Exzentrische Präzisionsklemmvorrichtung gemäß Anspruch 2,
**dadurch gekennzeichnet,**
**dass** die beiden Rollelemente (3) dieselbe Klemmrichtung aufweisen.

4. Exzentrische Präzisionsklemmvorrichtung gemäß Anspruch 2,
**dadurch gekennzeichnet,**
**dass** die beiden Rollelemente (3) entgegengesetzte Klemmrichtungen aufweisen.

## Revendications

1. Dispositif de serrage excentrique de précision consistant en un corps de cadre (1) ayant un premier alésage traversant cylindrique (2) dans lequel un rouleau cylindrique (3) est monté de façon ajustée avec possibilité de mouvement de rotation, le rouleau (3) ayant, sur sa périphérie, une rainure excentrique (9), le corps de cadre (1) ayant un second alésage (7a) et un troisième alésage (7b) mutuellement coaxiaux, avec leur axe tangent ou sensiblement tangent à la circonférence dudit premier alésage (2) et perpendiculaire à la génératrice de ladite circonférence, lesdits second et troisième alésages étant situés directement à l'opposé de la rainure excentrique (9) et ayant un diamètre légèrement plus grand que le diamètre de la corde (6) devant être serrée, **caractérisé par le fait que** ladite rainure excentrique (9) a son fond de forme semi-circulaire en coupe transversale, avec le rayon sensiblement égal au rayon de la corde (6) devant être serrée, et avec une profondeur changeant du zéro minimum à un maximum légèrement plus grande que le diamètre de la corde, et **par le fait que** le corps de cadre (1) a une cavité (10) communiquant avec ledit premier alésage (2) située directement à l'opposé de ladite rainure à excentrique (9) et adjacente audit second alésage (7a) et audit troisième alésage (7b), avec le fond de forme semi-circulaire en coupe transversale avec un rayon sensiblement égal au rayon de la corde (6) devant être serrée et avec une profondeur variable changeant de zéro à sensiblement la moitié du diamètre de la corde (6) où la cavité (10) en coupe le long de sa surface de symétrie constitue un arc (11), à une extrémité tangent à la circonférence du premier alésage (2) et à l'autre extrémité tangent ou sensiblement tangent au troisième alésage (7b), le rayon dudit arc étant légèrement plus grand que le rayon du premier alésage (2).

2. Dispositif de serrage excentrique de précision selon la revendication 1, **caractérisé par le fait qu'**il présente deux rouleaux travaillant en tandem indépendamment.

3. Dispositif de serrage excentrique de précision selon la revendication 2, **caractérisé par le fait que** lesdits deux rouleaux travaillent dans la même direction.

4. Dispositif de serrage excentrique de précision selon la revendication 2, **caractérisé par le fait que** lesdits deux rouleaux travaillent dans des directions opposées.
